# FASCICULE DE BREVET EUROPEEN

(11) **EP 4 081 477 B1**
(45) Date de publication et mention de la délivrance du brevet: **07.02.2024**
(21) Numéro de dépôt: 20833899.6
(22) Date de dépôt: 22.12.2020
(51) Int. Cl.: B66F 9/075, B66F 11/04, B66F 17/00

(54) **NACELLE ÉLÉVATRICE À CISEAUX ET PROCÉDÉ DE DÉTERMINATION DE LA STABILITÉ D'UNE TELLE NACELLE**
SCHERENARBEITSBÜHNE UND VERFAHREN ZUR BESTIMMUNG DER STABILITÄT EINER SOLCHEN SCHERENARBEITSBÜHNE
SCISSOR LIFT WORK PLATFORM AND METHOD FOR DETERMINING THE STABILITY OF SUCH A PLATFORM

(30) Priorité: 23.12.2019 FR 1915467
(43) Date de publication de la demande: 02.11.2022
(73) Titulaire: Haulotte Group, 42420 Lorette (FR)
(72) Inventeur: BEJI, Slaheddine, 38200 VIENNE (FR); MARET-VERDANT, Joël, 42740 SAINT PAUL EN JAREZ (FR)
(74) Mandataire: Lavoix
(86) Numéro de dépôt international: PCT/EP2020/087593
(87) Numéro de publication internationale: WO 2021/130209

(56) Documents cités:
- EP-A1- 1 396 468
- CN-A- 110 104 594
- US-B1- 8 505 684

## Description

La présente invention concerne une nacelle élévatrice à ciseaux et un procédé de détermination de la stabilité d'une telle nacelle.

Les nacelles élévatrices à ciseaux comportent un châssis monté sur des roues, un dispositif de levage sous forme de bras articulés sous forme de ciseaux, et une plateforme de travail configurée pour être levée grâce au dispositif de levage. Le levage de la plateforme se fait généralement par l'intermédiaire d'un vérin actionnant les bras articulés. Les bras de ciseaux sont articulés les uns aux autres par des axes. Pour permettre le levage, les extrémités des bras supérieurs sont reliées à des patins destinés à coulisser dans des rails prévus sous le plancher de la plateforme. Les extrémités des bras inférieurs sont reliées à des patins destinés à coulisser dans des rails prévus sur le châssis.

Sur les nacelles à ciseaux, la stabilité est essentielle pour des raisons de sécurité. La hauteur de la plateforme, ainsi que la charge qu'elle supporte, sont des éléments à connaitre pour contrôler cette stabilité et s'assurer que l'opérateur n'utilise pas la machine au-delà des conditions de sécurité.

EP 1 396 468 décrit des capteurs de contrainte de cisaillement intégrés dans les axes de pivotement des bras par rapport aux patins. EP 1 396 468 décrit une nacelle élévatrice à ciseaux selon le préambule de la revendication indépendante 1.

Une telle technique nécessite des axes de pivotement spécialement conçus.

C'est à ces inconvénients qu'entend remédier l'invention en proposant une nouvelle nacelle élévatrice à ciseaux, dans laquelle la stabilité peut être mesurée en utilisant des capteurs de coût moindre et avec une conception simplifiée.

A cet effet, l'invention concerne une nacelle élévatrice à ciseaux, telle que définie à la revendication 1.

Grâce à l'invention, il est possible de définir la stabilité de la machine en utilisant des capteurs d'effort standard.

Des aspects avantageux mais non obligatoires de la nacelle selon l'invention sont spécifiés aux revendications 2 à 10.

L'invention concerne également un procédé de détermination de la stabilité d'une nacelle telle que mentionnée ci-dessus, ce procédé étant tel que défini à la revendication 11.

Des aspects avantageux mais non obligatoires du procédé selon l'invention sont spécifiés aux revendications 12 et 13.

L'invention sera mieux comprise et d'autres avantages de celle-ci apparaitront plus clairement à la lumière de la description qui va suivre d'une nacelle élévatrice à ciseaux et d'un procédé de détermination de la stabilité conformes à son principe, faite à titre d'exemple non limitatif en référence aux dessins annexés dans lesquels :
[Fig 1] La figure 1 est une vue en perspective d'une nacelle élévatrice à ciseaux conforme à l'invention ;
[Fig 2] La figure 2 est une vue de côté d'un châssis de la nacelle de la figure 1 ;
[Fig 3] La figure 3 est une vue de côté d'une plateforme de la nacelle de la figure 1 ;
[Fig 4] La figure 4 est une vue en coupe d'un bloc d'articulation inférieur de la nacelle élévatrice équipé d'un capteur d'effort ;

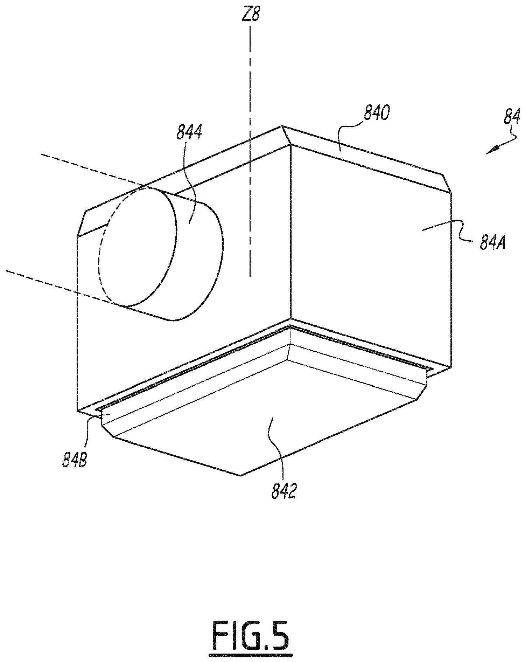

[Fig 5] La figure 5 est une vue en perspective du bloc d'articulation de la figure 4 ;
[Fig 6] La figure 6 est une vue en coupe d'un bloc d'articulation supérieur équipé d'un capteur d'effort, appartenant à une nacelle élévatrice conforme à un deuxième mode de réalisation de l'invention;
[Fig 7] La figure 7 est une vue en perspective éclatée d'un bloc d'articulation supérieur équipé d'un capteur d'effort, appartenant à une nacelle élévatrice conforme à un troisième mode de réalisation de l'invention ;
[Fig 8] La figure 8 est une coupe d'un bloc d'articulation supérieur équipé d'un capteur, appartenant à une nacelle élévatrice conforme à un quatrième mode de réalisation de l'invention ;
[Fig 9] La figure 9 est une vue de côté d'une plateforme d'une nacelle élévatrice conforme à un cinquième mode de réalisation de l'invention, comprenant une extension latérale déployée ;
[Fig 10] La figure 10 est une coupe d'un bloc d'articulation supérieur de la plateforme de la figure 9, équipé d'un capteur flottant;
[Fig 11] La figure 11 est une coupe d'un bloc d'articulation supérieur équipé de deux capteurs, appartenant à une plateforme analogue à la figure 9, et appartenant à une nacelle élévatrice conforme à un sixième mode de réalisation de l'invention.

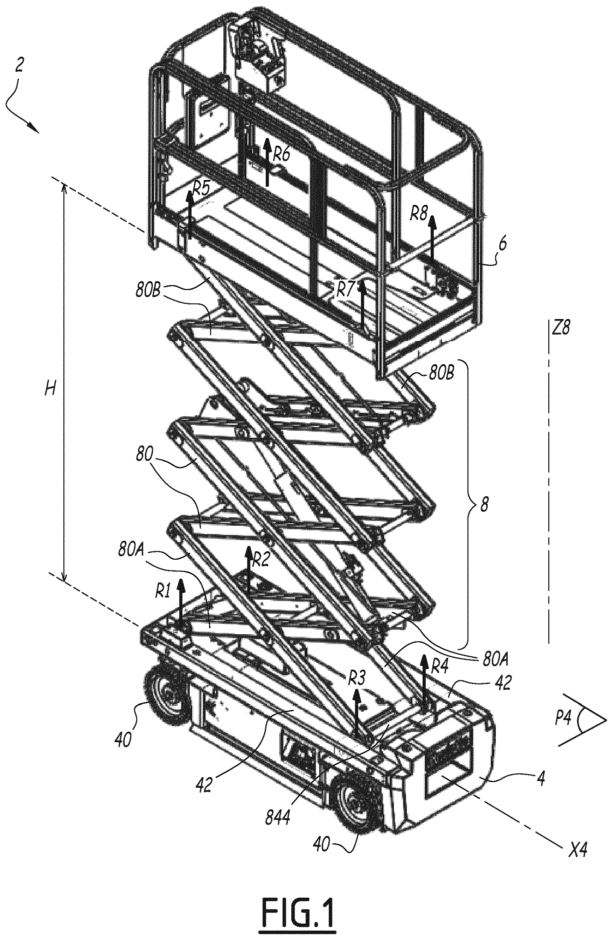

La figure 1 représente une nacelle élévatrice à ciseaux 2, comprenant un châssis 4 apte à reposer sur un sol S par des organes de liaison tels que des roues 40. La nacelle 2 comprend également une plateforme 6, et un dispositif de levage 8 de la plateforme 6. Le dispositif de levage 8 comprend un jeu de barres 80 articulées supportant la plateforme 6, de telle sorte que l'élévation de la plateforme 6 par rapport au châssis 4 est variable et contrôlée par le jeu de barres 80. Le dispositif de levage 8 comprend également un vérin 82 qui actionne les barres 80 pour contrôler une hauteur H de la plateforme 6 par rapport au châssis 4.

Le châssis 4 définit un plan horizontal P4. Le dispositif de levage 8 définit un axe vertical d'élévation Z8 perpendiculaire au plan horizontal P4. On désigne X4 un axe longitudinal du châssis 4 orienté parallèlement à la direction d'avancée du châssis 4. L'axe longitudinal X4 est parallèle au plan horizontal P4 et perpendiculaire à l'axe vertical Z8.

Le jeu de barres 80 comprenant quatre barres inférieures 80A parallèles deux-à-deux reliées au châssis 4 par quatre blocs d'articulation inférieurs 84 dont trois sont visibles à la figure 1. Le jeu de barres 80 comprenant également quatre barres supérieures 80B parallèles deux-à-deux reliées à la plateforme 6 par quatre blocs d'articulation supérieurs 86.

Le châssis 4 est équipé de deux rails 42, disposés parallèlement à l'axe longitudinal X4 de chaque côté longitudinal sur une partie supérieure du châssis 4. Chacun de ces rails 42 sert à relier deux des blocs d'articulation inférieurs 84 au châssis 4.

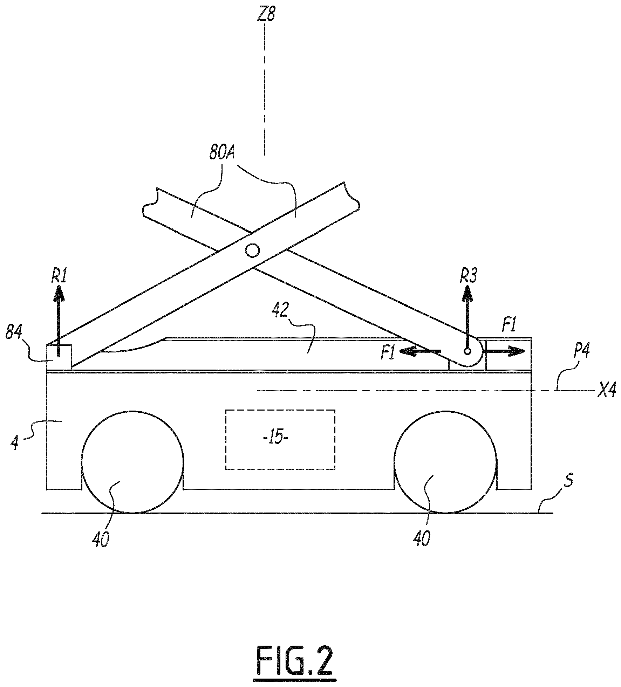

L'un des rails 42 est visible sur la figure 2. Le bloc d'articulation inférieur 84 situé sur le côté gauche du rail 42 est monté de façon fixe au rail 42. Le bloc d'articulation inférieur 84 situé sur le côté droit est monté de façon glissante dans le rail 42, de manière à être libre en translation selon l'axe longitudinal X4 selon les flèches F1. Deux des barres parallèles inférieures 80A sont donc reliées de façon glissante au châssis 4.

De la même manière, la plateforme 6 est équipé de deux rails 62, disposés parallèlement à l'axe longitudinal X4 de chaque côté longitudinal sur une partie inférieure de la plateforme 6. Chacun de ces rails 62 sert à relier deux des blocs d'articulation supérieurs 86 à la plateforme 6.

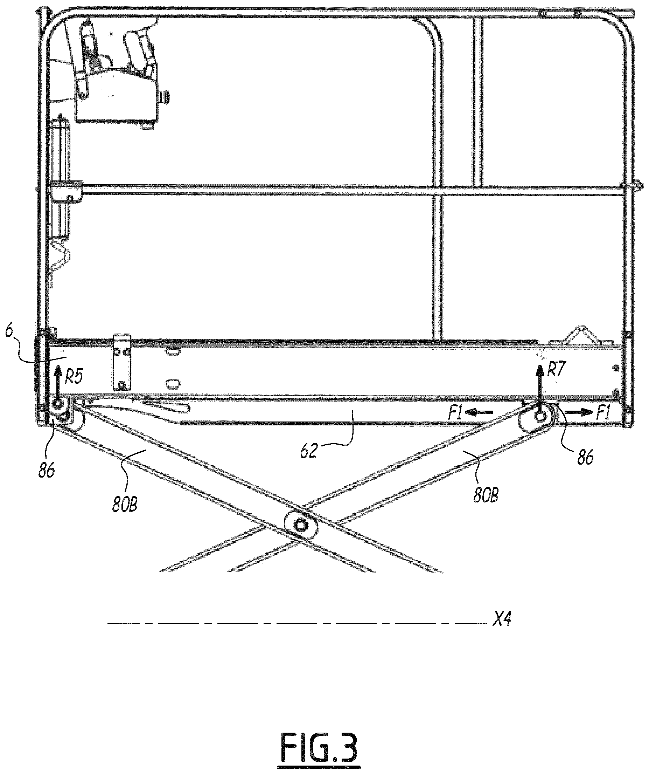

L'un des rails 62 est visible sur la figure 3. Le bloc d'articulation supérieur 86 situé sur le côté gauche du rail 62 est monté de façon fixe au rail 62. Le bloc d'articulation supérieur 86 situé sur le côté droit est monté de façon glissante dans le rail 62, de manière à être libre en translation selon l'axe longitudinal X4 selon les flèches F1. Deux des barres parallèles supérieures 80B donc sont reliées à la plateforme 6 de façon glissante.

Le glissement des blocs d'articulation 84 et 86 dans les rails 42 et 62 permet la rotation des barres du jeu de barres 80 et permet l'élévation ou la descente de la plateforme 6 selon l'axe vertical Z8.

En variante non représentée, les quatre blocs d'articulation supérieurs 86 et les quatre blocs d'articulation inférieurs 84 peuvent être montés glissants respectivement par rapport à la plateforme 6 et au châssis 4.

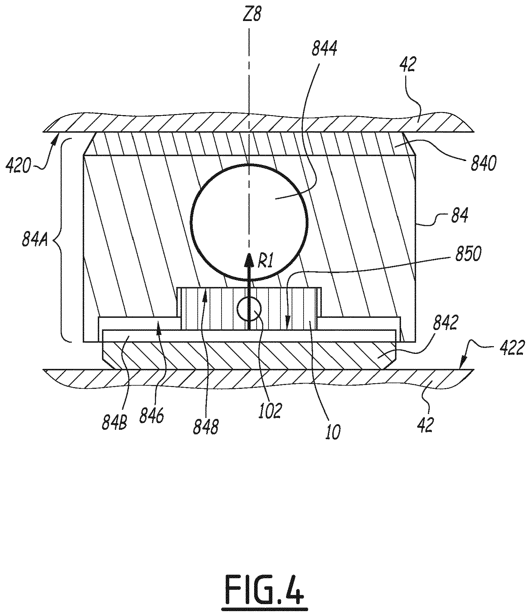

La figure 4 représente en vue agrandie et en coupe la structure d'un des blocs d'articulation inférieurs 84 monté dans l'un des rails 42 du châssis 4. Le rail 42 comporte une surface supérieure 420 orientée vers le bas, et qui exerce un contact glissant sur un patin supérieur 840 porté par le bloc d'articulation 84. Le rail 42 comporte également une surface inférieure 422, orientée vers le haut, en regard de la surface supérieure 420, et qui exerce un contact glissant sur un patin inférieur 842 du bloc d'articulation supérieur 84.

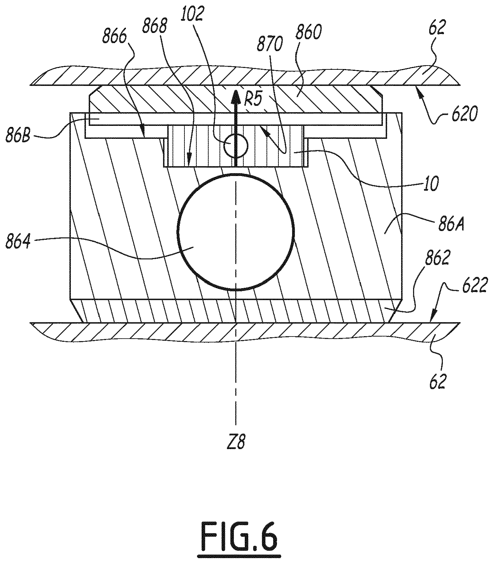

Les blocs d'articulation supérieurs 86 présentent une structure similaire. La figure 6 représente en vue agrandie et en coupe la structure d'un des blocs d'articulation supérieurs 86 monté dans l'un des rails 62 de la plateforme 6. Le rail 62 comporte une surface supérieure 620 orientée vers le bas, et qui exerce un contact glissant sur un patin supérieur 860 porté par le bloc d'articulation 86. Le rail 62 comporte également une surface inférieure 622, orientée vers le haut, en regard de la surface supérieure 620, et qui exerce un contact glissant sur un patin inférieur 862 du bloc d'articulation supérieur 86.

Pour évaluer la stabilité de la nacelle élévatrice 2, celle-ci comprend au moins quatre capteurs 10 configurés pour mesurer des forces de réaction induites par la plateforme 6, son éventuel chargement et le dispositif de levage 8 sur les blocs d'articulation inférieurs 84 selon l'axe vertical Z8.

Conformément à un premier mode de réalisation, la nacelle élévatrice 2 comporte quatre capteurs 10 qui équipent chacun des blocs d'articulation inférieurs 84.

Chaque bloc d'articulation 84 comporte une première partie 84A, solidaire d'un axe 844 articulé sur les barres inférieures 80A, et une seconde partie 84B, mobile par rapport à la première partie 84A et qui est en contact avec une surface du châssis 4. Les capteurs 10 sont interposés entre la première partie 84A et la seconde partie 84B.

Plus précisément, la première partie 84A porte le patin supérieur 840, tandis que la seconde partie 84B porte le patin inférieur 842. L'axe 844 est fixé à la première partie 84A, et l'une des barres inférieures 80A est montée rotative sur l'axe 844.

La seconde partie 84B de chaque bloc d'articulation inférieur 84 équipé d'un capteur 10 est formée par un corps formant une zone inférieure du bloc d'articulation inférieur 84, et est insérée dans un logement inférieur 846 formé sur la première partie 84A.

La première partie 84A du bloc d'articulation inférieur 84 comprend une surface 848 perpendiculaire à l'axe vertical Z8, la seconde partie 84B comprend une surface 850 perpendiculaire à l'axe vertical Z8 et en regard de la surface 848 de la première partie 84A. Le capteur 10 est un capteur de compression interposé entre la surface 848 de la première partie 84A et la surface 850 de la seconde partie 84B. La première partie 84A et la seconde partie 84B sont mobiles l'une par rapport à l'autre en translation selon l'axe vertical Z8. Le poids de la plateforme 6 et de son éventuel chargement, additionné au poids du dispositif de levage 8, exerce une force dirigée verticalement vers le bas qui induit une force de réaction R1 dirigée vers le haut et qui s'exerce par la résistance de la seconde partie 84B, en appui contre le châssis 4, à l'encontre de l'effort exercé par la première partie 84A. La force de réaction R1 induit une compression dans le capteur 10, compressé entre les surfaces 848 et 850 parallèlement à l'axe vertical Z8, ce qui permet de mesurer la valeur de la force correspondante.

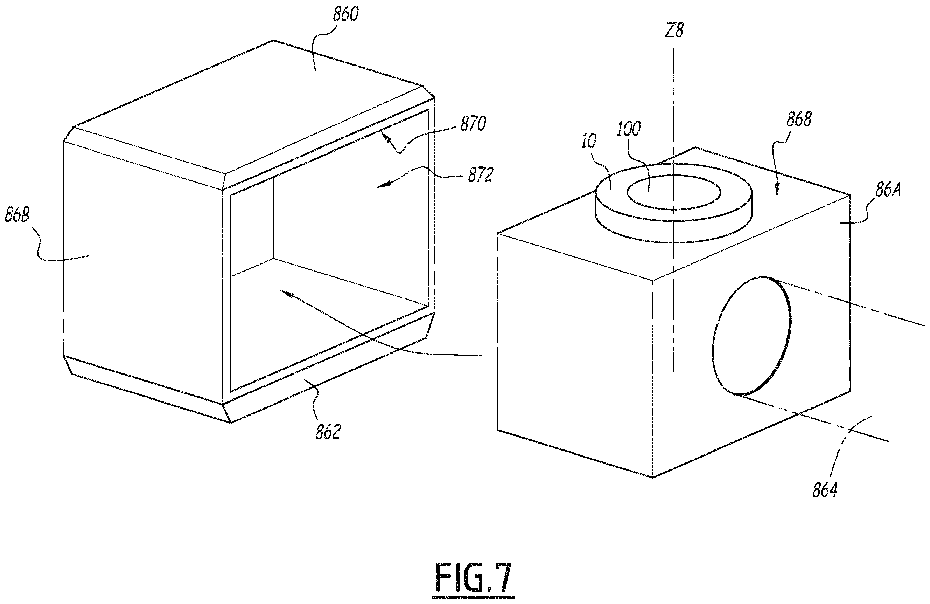

Le capteur de compression 10 est un composant standard de forme annulaire présentant en son centre un contact 100 de mesure de force (visible à la figure 7), et à sa périphérie une sortie de câble 102 pour la transmission des mesures. La structure du bloc d'articulation inférieur 84 permet l'intégration de composants standard, ce qui permet une réduction du coût de la machine et de faciliter la maintenance en cas de fonctionnement défectueux d'un capteur 10.

Les forces de réaction mesurées par les capteurs 10 dans les quatre blocs d'articulation inférieurs 84 sont respectivement référencées R1, R2, R3 et R4 (figure 1).

La nacelle élévatrice à ciseaux 2 comporte une unité électronique 15 de calcul de stabilité et de contrôle de la nacelle élévatrice 2. Cette unité électronique est configurée pour effectuer différents calculs de stabilité.

Les valeurs des réactions R1, R2, R3 et R4 permettent de déterminer le dévers, c'est-à-dire l'angle d'inclinaison du plan P4 du châssis par rapport au sol S. A la figure 2, le plan P4 est parallèle au sol S, le dévers est donc nul. Mais sur un sol S irrégulier, le plan P4 peut ne pas être parallèle au sol S, et un angle de dévers existe alors. Le dispositif de levage 8 est donc incliné, ce qui nécessite d'évaluer la stabilité de la nacelle 2.

Lorsque l'addition de deux des valeurs R1, R2, R3 et R4 devient inférieure à une valeur seuil, cela signifie que du côté des blocs d'articulation 84 concernés, la réaction devient trop faible et que le dévers fait que l'essentiel du poids est porté sur les deux autres blocs d'articulation 84, ce qui augmente le risque de renversement. En tenant compte de l'élévation de la plateforme et de la masse totale de la nacelle 2, l'unité électronique 15 calcule si les mouvements dans la direction concernée doivent être surveillés, détermine la tendance au renversement et peut activer une alarme et bloquer les mouvements potentiellement aggravants.

En utilisant les valeurs des réactions R1, R2, R3 et R4 et le poids de la nacelle, l'unité électronique 15 localise le centre de gravité de la nacelle 2. La stabilité est vérifiée par rapport à une enveloppe de stabilité définie dans le plan P4. Cette enveloppe peut prendre la forme d'un rectangle, d'un cercle, d'une ellipse, plus généralement de toute forme adaptée aux caractéristiques de la nacelle élévatrice 2.

Si le centre de gravité est localisé dans l'enveloppe de stabilité, l'élévation de la plateforme 6 par rapport au châssis 4 et les mouvements du châssis 4 par rapport au sol S dans les limites de cette enveloppe sont autorisés par l'unité électronique 15. En revanche, si un mouvement a tendance à faire sortir le centre de gravité de l'enveloppe de stabilité, ce mouvement est interdit par l'unité électronique 15.

Un mouvement qui améliore la stabilité, c'est-à-dire qui replace le centre de gravité dans une meilleure zone de l'enveloppe de stabilité, est autorisé par l'unité électronique 15.

L'invention permet donc de prédire le risque de renversement et de contrôler la nacelle élévatrice 2 de façon plus performante que dans les techniques de l'art antérieur. En effet, le calcul de la localisation du centre de gravité de la charge de la plateforme 6 permet de déterminer la tendance au renversement de façon précise en cas de dévers et d'adapter les possibilités de déplacement de la machine.

Dans les arts antérieurs connus, si le dévers mesuré par un capteur adapté dépasse une valeur maximale, le système de contrôle de l'engin stoppe tous les mouvements. L'invention permet de limiter différemment les mouvements de la nacelle, et de ne pas systématiquement interdire tous les mouvements lorsque certains sont bénéfiques pour la stabilité.

L'invention est particulièrement avantageuse dans le cas de machines destinée à un usage dans des espaces intérieurs (par exemple, entrepôts, hangars, halls d'assemblage), dans lesquels le sol est généralement toujours plat et qui sont amenées à être utilisées en extérieur exceptionnellement, où le sol peut présenter des irrégularités. Ces machines ne sont pas équipées de capteur pour détecter si la machine est en extérieur ou en intérieur, ce qui ne permet pas d'adapter le comportement de la machine et rend dangereux leur utilisation en extérieur. Avec le calcul du centre de gravité, si une machine d'intérieur est utilisée en extérieur, les risques de renversement peuvent tout de même être détectés.

Dans le cas où les capteurs 10 sont montés dans les blocs d'articulation inférieurs 84, c'est-à-dire du côté du châssis 4, la détermination de la tendance au renversement est plus précise, car les efforts du vent sur le dispositif de levage 8 et la plateforme 6 sont reflétés par les mesures des réactions R1, R2, R3 et R4 et donc pris en compte dans leur impact sur le renversement, ce qui permet une amélioration des performances et du contrôle de la machine.

D'autres modes de réalisation de l'invention sont représentés sur les figures 6 à 11. Dans ces modes de réalisation, les éléments communs au premier mode de réalisation portent les mêmes références et fonctionnent de la même manière. Seulement les différences sont détaillées ci-après.

La figure 6 représente un deuxième mode de réalisation, dans lequel les quatre capteurs 10 équipent les blocs d'articulation supérieurs 86. Dans ce cas, le principe de fonctionnement des capteurs 10 et leur implantation dans les blocs d'articulation supérieurs 86 suit le même principe que celui des blocs d'articulation inférieurs 84, avec une structure inversée.

Les blocs d'articulation supérieurs 86 comportent une première partie 86A, qui est solidaire d'un axe 864 articulé sur les barres supérieures 80B, et une seconde partie 86B, mobile en translation par rapport à la première partie 86A selon l'axe vertical Z8, et qui est en contact avec une surface de la plateforme 6, en l'occurrence la surface inférieure 620, par l'intermédiaire du patin 860. La première partie 86A est en contact avec le rail 62 via le patin inférieur 862.

Dans ce cas de figure, la seconde partie 86B forme la partie supérieure du bloc d'articulation 86, et la première partie 86A présente un logement 866 formé sur sa partie supérieure, dans lequel la seconde partie 86B est reçue. La première partie 86A présente une surface 868 perpendiculaire à l'axe vertical Z8, et la seconde partie 86B présente une surface 870 perpendiculaire à l'axe vertical Z8 et en regard de la surface 866. Le capteur 10 est compressé entre les surfaces 866 et 870, et permet de mesurer une force de réaction R5 du dispositif de levage 8 induit par le poids de la plateforme 6 et de son éventuel chargement.

Les forces de réaction mesurées par les capteurs 10 dans les quatre blocs d'articulation supérieurs 86 sont respectivement référencées R5, R6, R7 et R8 (figure 1).

La mesure des forces de réaction R5, R6, R7 et R8 permet de calculer, avec l'unité électronique 15, la localisation du centre de gravité de la plateforme 6 et d'une charge qui s'y trouve, et donc de mesurer l'influence du dévers sur la stabilité de la nacelle élévatrice 2.

La figure 7 représente un troisième mode de réalisation, appliqué à l'un des blocs d'articulation supérieurs 86, mais qui est également applicable aux blocs d'articulation inférieurs 84. Dans ce mode de réalisation, la seconde partie 86B se présente sous la forme d'un corps creux présentant un évidement 872 dans lequel la première partie 86A est insérée. La seconde partie 86B porte dans ce cas à la fois le patin supérieur 860 et le patin inférieur 862. La première partie 86A se présente alors sous la forme d'un corps de forme parallélépipédique solidaire de l'axe 864. La surface 870 est formée par une face interne supérieure de la cavité 872, et la surface 868 est formée par la face supérieure du parallélépipède formant la première partie 86A. Les dimensions respectives de la cavité 872 et de la première partie 86A permettent un mouvement relatif en translation selon l'axe vertical Z8 de manière que les variations dans la compression du capteur 10, compressé entre les surfaces 868 et 870 permettent de mesure la force de réaction.

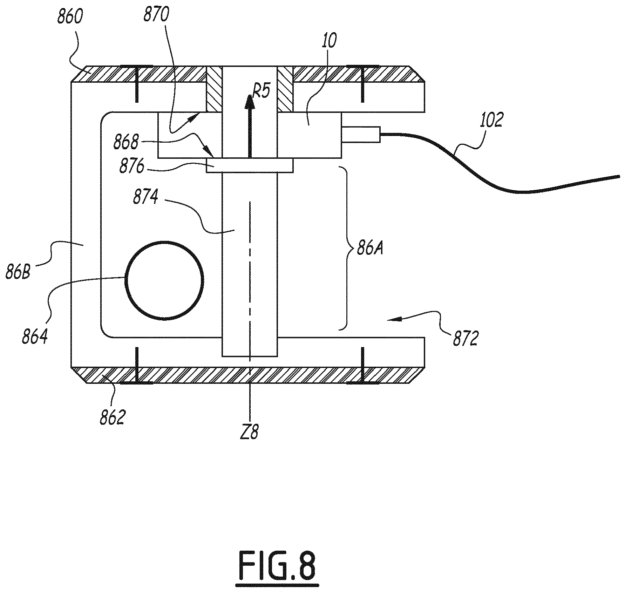

La figure 8 représente un quatrième mode de réalisation, appliqué à l'un des blocs d'articulation supérieurs 86, mais qui est également applicable aux blocs d'articulation inférieurs 84. Dans ce mode de réalisation, la première partie 86A comporte une tige verticale 874 centrée sur l'axe vertical Z8, solidaire de l'axe 864 et perpendiculaire à cet axe 864, qui est placé de façon excentrée par rapport à l'axe vertical Z8. La tige verticale 874 présente un anneau 876 sur lequel est formée la surface 868 de la première partie 86A.

La seconde partie 86B présente une forme similaire à celle de la figure 7 avec un évidement 872 sur lequel est formée la surface 870. La tige verticale 874 traverse la seconde partie 86B autour de la surface 870, et le capteur de compression 10, qui est dans ce cas de forme annulaire, est compressé entre l'anneau 876 et la surface 870 de la seconde partie 86B.

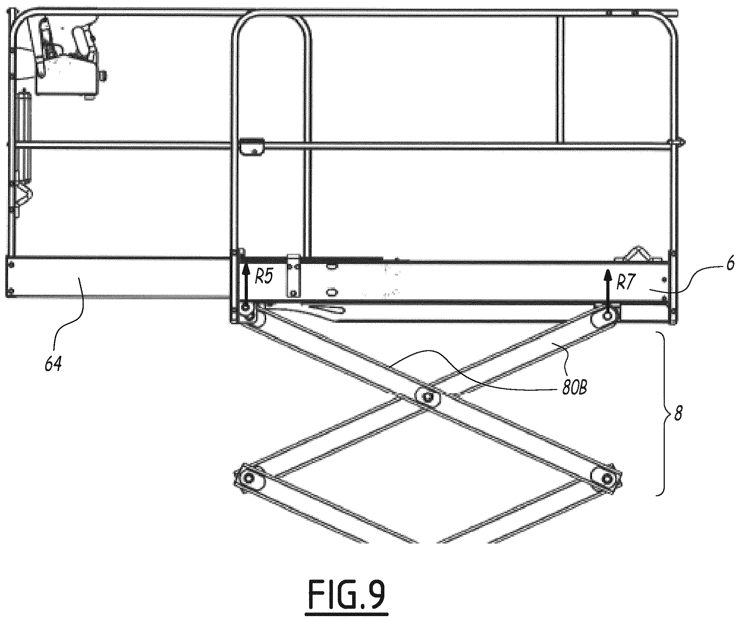

Les figures 9, 10 et 11 représentent un cinquième et un sixième mode de réalisation de l'invention. Selon un aspect optionnel représenté à la figure 9, la plateforme 6 comporte une extension rétractable 64, qui est configurée pour être déployée sur un coté de la plateforme 6 de manière à augmenter la surface de celle-ci. Le déploiement de l'extension 64 modifie la localisation du centre de gravité de la plateforme 6.

Dans le cas où les capteurs 10 équipent les blocs d'articulation inférieurs 84, le déploiement de l'extension 64 sera pris en compte dans l'analyse de la stabilité et les mesures des capteurs 10 donneront des forces de réaction R1, R2, R3 et R4 modifiées par le déploiement de l'extension 64.

En revanche, dans le cas où les capteurs 10 équipent les blocs d'articulation supérieurs 86, l'extension 64 déployée accentue le poids exercé sur les blocs d'articulations 86 les plus proches de l'extension 64, et diminue le poids exercé sur les blocs d'articulation 86 les plus éloignés de l'extension 64, dans un phénomène de porte-à-faux, ce qui peut causer des mesures erronées des forces de réaction R7 et R8, situées à l'opposé de l'extension 64, dans le cas où plus aucune compression ne s'exerce sur les capteurs 10.

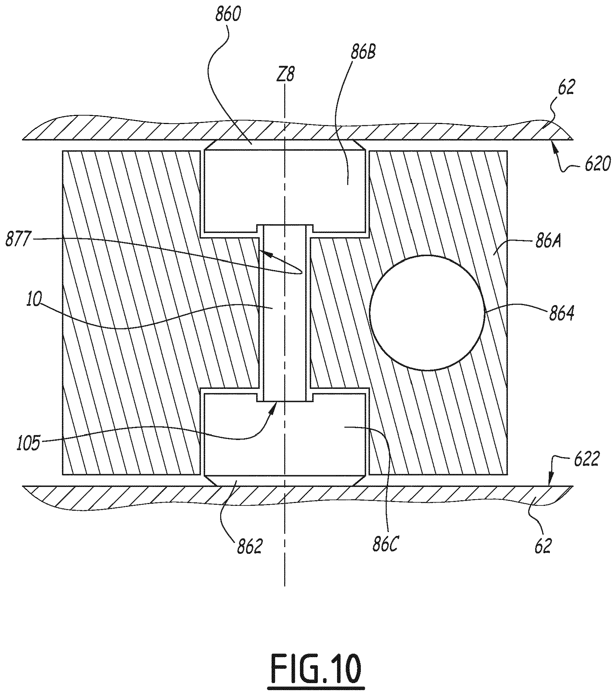

Dans un tel cas, comme cela est visible à la figure 10 représentant le cinquième mode de réalisation, le capteur 10 équipant chacun des quatre blocs d'articulation supérieurs 86 est de forme cylindrique centrée sur l'axe vertical Z8 et est monté flottant dans un logement cylindrique 877 de la première partie 86A, c'est-à-dire qu'il est libre de mouvement en translation selon l'axe vertical Z8, par rapport à la première partie 86A.

Le bloc d'articulation supérieur 86 comprend deux parties 86B et 86C mobiles par rapport à la première partie 86A selon l'axe vertical Z8. La partie mobile 86B est en contact avec la surface supérieure 620 du rail 62 et porte le patin supérieur 860, tandis que la partie mobile 86C est en contact avec la surface inférieure 622 du rail 62. Enfin, chacune des deux parties mobiles 86B et 86C est en contact avec une extrémité axiale respective 104 et 105 du capteur 10.

Ainsi, lorsque l'extension 64 est rétractée, la force de réaction selon l'axe vertical Z8 va être mesurée par la transmission du poids de la plateforme 6 à la partie mobile 86B. La partie mobile 86B déplace le capteur 10 contre l'épaulement 8770, qui exerce la force de réaction du dispositif de levage 8, et la compression du capteur 10 permet la mesure de la force de réaction.

Dans le cas où l'extension 64 est déployée, le côté de la plateforme 6 opposé à l'extension 64 va avoir tendance à se relever et à exercer une force orientée vers le haut sur la première partie 86A. Le poids de la plateforme 6 est alors transmis par la partie mobile 86C, qui déplace le capteur contre l'épaulement 8772, et la mesure de la force de réaction correspond donc à la compression du capteur 10 entre l'épaulement 8772 et la partie mobile 86C.

Dans ce cas de figure, l'axe de pivotement 864 est en position excentrée par rapport à l'axe vertical Z8.

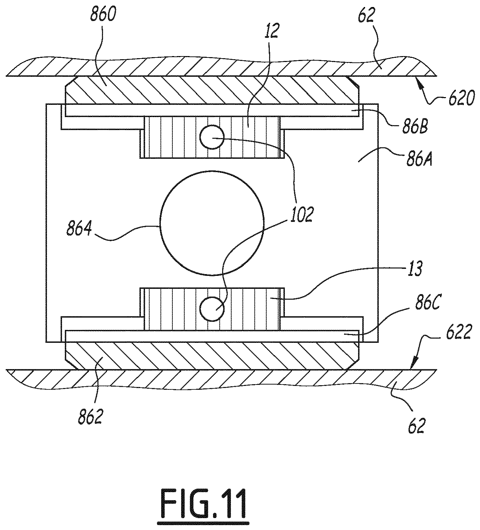

Selon un sixième mode de réalisation représenté à la figure 11, au lieu d'un seul capteur 10 flottant, le bloc d'articulation supérieur 86 est équipé de deux capteurs 12 et 13, positionnés de façon fixe dans la première partie 86A. Le capteur 12 se trouve au-dessus de l'axe 864 et est configuré pour mesurer la force exercée sur la première partie 86A par la partie mobile 86B en contact avec la surface supérieure 620 du rail 62. Le capteur 13 se trouve au-dessous de l'axe 864 et est configuré pour mesurer la force exercée sur la première partie 86A par la partie mobile 86C en contact avec la surface inférieure 622 du rail 62.

Selon une variante non représentée de l'invention, les capteurs 10 peuvent ne pas être des capteurs de compression, mais de capteurs de contrainte, et la nacelle élévatrice comprendre un système de traitement de données configuré pour calculer les forces de réaction à partir des mesures de contraintes.

Les caractéristiques des modes de réalisation et variantes décrits ci-dessus peuvent être combinées pour former d'autres modes de réalisation dans l'étendue définie par les revendications.

## Revendications

1. Nacelle élévatrice à ciseaux (2) comprenant :
- un châssis (4) apte à reposer sur le sol par des organes de liaison (40),
- une plateforme (6),
- un dispositif de levage (8) de la plateforme (6), comprenant un jeu de barres articulées (80) supportant la plateforme (6), de telle sorte que l'élévation de ladite plateforme (6) par rapport audit châssis (4) est variable et contrôlée par ledit jeu de barres (80), le jeu de barres (80) comprenant quatre barres inférieures parallèles deux-à-deux (80A) articulées sur quatre blocs d'articulation inférieurs (84) reliés au châssis (4), le jeu de barres (80) comprenant également quatre barres supérieures parallèles deux-à-deux (80B) articulées sur quatre blocs d'articulation supérieurs (86) reliés à la plateforme (6),
- au moins quatre capteurs (10) configurés chacun pour mesurer une force de réaction (R1-R4, R5-R8) induite par la plateforme (6) dans l'un des quatre blocs d'articulation inférieurs (84) et/ou dans l'un des quatre blocs d'articulation supérieurs (86) selon un axe vertical (Z8) de la nacelle (2), ces capteurs équipant chacun un bloc d'articulation inférieur (84) ou supérieur (86)
la nacelle étant **caractérisée en ce que** chaque bloc d'articulation équipé d'un capteur (10) comprend une première partie (84A, 86A) solidaire d'un axe (844, 864) de pivotement articulé respectivement sur l'une des barres inférieures (80A) ou supérieures (80B), et une seconde partie (84B, 86B, 86C) mobile par rapport à la première partie (84A, 86A) et en contact respectivement avec une surface (422, 620) du châssis (4) ou de la plateforme (6), et **en ce que** chaque capteur (10) est interposé entre la première partie (84A, 86A) du bloc d'articulation (84, 86) dans lequel il est monté et la seconde partie (84B, 86B, 86C) de ce bloc d'articulation (84, 86) de manière à mesurer la force exercée par la seconde partie (84B, 86B, 86C) sur la première partie (84A, 86A) correspondant à la force de réaction (R1-R4, R5-R8).

2. Nacelle élévatrice à ciseaux selon la revendication 1, **caractérisée en ce que** dans chaque bloc d'articulation (84, 86) équipé d'un capteur (10), la première partie (84A, 86A) de ce bloc d'articulation comprend une surface (848, 868) perpendiculaire à l'axe vertical (Z8) de la nacelle, la seconde partie (84B, 86B, 86C) de ce bloc d'articulation comprend une surface (850, 870) perpendiculaire à l'axe vertical de la nacelle et en regard de la surface de la première partie (84A, 86A), la première partie (84A, 86A) et la seconde partie (84B, 86B, 86C) étant mobiles l'une par rapport à l'autre en translation selon l'axe vertical de la nacelle, et **en ce que** le capteur (10) est un capteur de compression et est interposé entre la surface (848, 868) de la première partie (84A, 86A) et la surface (850, 870) de la seconde partie (84B, 86B, 86C).

3. Nacelle élévatrice à ciseaux selon la revendication 2, **caractérisée en ce que** la seconde partie (84B, 86B, 86C) de chaque bloc d'articulation (84, 86) équipé d'un capteur (10) forme respectivement une zone supérieure ou inférieure de ce bloc d'articulation (84, 86), et est insérée dans un logement supérieur (866) ou inférieur (846) formé sur la première partie (84A, 86A) de ce bloc d'articulation (84, 86).

4. Nacelle élévatrice à ciseaux selon la revendication 2, **caractérisée en ce que** la seconde partie (86B) présente un évidement (872) dans lequel est insérée la première partie (86A).

5. Nacelle élévatrice à ciseaux selon la revendication 2, **caractérisée en ce que** la première partie comporte une tige verticale (874) solidaire de l'axe de pivotement (864) et perpendiculaire à cet axe, **en ce que** la tige verticale (874) présente un anneau (876) formant la surface (868) de la première partie (86A), **en ce que** la tige verticale (874) traverse la seconde partie (86B) autour de la surface (870) de la seconde partie (86B), et **en ce que** le capteur de compression (10) est de forme annulaire et repose entre l'anneau (876) de la tige verticale (874) et la surface (870) de la seconde partie (86B).

6. Nacelle élévatrice à ciseaux selon l'une des revendications précédentes, **caractérisée en ce que** au moins deux des blocs d'articulations inférieurs (84), articulés sur deux barres inférieures parallèles (80A), sont reliés de façon glissante au châssis (4) par un patin (840) prévu sur la seconde partie (84B) de ces blocs d'articulations inférieurs (84) en appui contre une surface (422) d'un rail (42) fixé au châssis (4), et au moins deux des blocs d'articulation supérieurs (86), articulés sur deux barres supérieures parallèles (80B), sont reliés à la plateforme (6) de façon glissante par un patin (860) prévu sur la seconde partie (86B) de ces blocs d'articulation supérieurs (86) en appui contre une surface (620) d'un rail (62) fixé à la plateforme (6).

7. Nacelle élévatrice à ciseaux selon l'une des revendications précédentes, **caractérisée en ce que** les au moins quatre capteurs (10) sont prévus dans les blocs d'articulation inférieurs (84).

8. Nacelle élévatrice à ciseaux selon l'une des revendications 1 à 6, **caractérisée en ce que** les au moins quatre capteurs (10) sont prévus dans les blocs d'articulation supérieurs (86).

9. Nacelle élévatrice à ciseaux selon la revendication 8, **caractérisée en ce que** la plateforme (6) comporte une extension rétractable (64), qui est configurée pour être déployée sur un coté de la plateforme (6) de manière à augmenter la surface de la plateforme (6), et **en ce que** le capteur (10) équipant chacun des quatre blocs d'articulation supérieurs (86) est monté flottant dans un logement (876) de la première partie (86A), **en ce que** chaque bloc d'articulation supérieur (86) comprend deux parties mobiles (86B, 86C) par rapport à la première partie (86A), chacune de ces deux parties mobiles (86B, 86C) étant en contact respectivement avec une surface supérieure (620) et inférieure (622) d'un rail (62) fixé à la plateforme (6) et dans lequel le bloc d'articulation (86) est monté et **en ce que** chacune des deux parties mobiles (86B, 86C) est en contact avec le capteur (10).

10. Nacelle élévatrice à ciseaux selon la revendication 8, **caractérisée en ce que** la plateforme (6) comporte une extension rétractable (64), qui est configurée pour être déployée sur un coté de la plateforme (6) de manière à augmenter la surface de la plateforme (6), **en ce que** chaque bloc d'articulation supérieur (86) comprend deux parties mobiles (86B, 86C) par rapport à la première partie (86A), chacune de ces deux parties mobiles (86B, 86C) étant en contact respectivement avec une surface supérieure (620) et inférieure (622) d'un rail (62) fixé à la plateforme (6) et dans lequel le bloc d'articulation (86) est monté et **en ce que** le bloc d'articulation (86) est équipé de deux capteurs (12, 13), l'un (12) étant configuré pour mesurer la force exercée sur la première partie (86A) par la partie mobile (86B) en contact avec la surface supérieure (620) du rail (62), l'autre (13) étant configuré pour mesurer la force exercée sur la première partie (86A) par la partie mobile (86C) en contact avec la surface inférieure (622) du rail (62).

11. Procédé de détermination de la stabilité d'une nacelle élévatrice à ciseaux (2) selon l'une des revendications précédentes, **caractérisé en ce qu'**il comprend une étape consistant, dans une unité électronique (15) de la nacelle (2), à calculer la somme de deux des forces de réaction (R1-R4) induites par la plateforme (6) dans l'un des quatre blocs d'articulation inférieurs (84) ou de deux des forces de réaction (R5-R8) induites par la plateforme (6) dans l'un des quatre blocs d'articulation supérieurs (86), à comparer ladite somme à une valeur seuil, et si ladite somme est inférieure à la valeur seuil, déclencher des actions de limitation du risque de renversement.

12. Procédé selon la revendication 11, **caractérisé en ce que** les actions de limitation du risque de renversement comprennent au moins l'activation d'une alarme ou le blocage de mouvements de la nacelle (2) dans une direction correspondant aux forces de réaction dont la somme est inférieure à la valeur seuil.

13. Procédé selon l'une des revendications 11 et 12, **caractérisé en ce qu'**il comprend une étape consistant à calculer, dans l'unité électronique (15), l'emplacement d'un centre de gravité de la nacelle (2) en utilisant les valeurs des forces de réaction (R1-R4) induites par la plateforme (6) dans l'un des quatre blocs d'articulation inférieurs (84) ou des forces de réaction (R5-R8) induites par la plateforme (6) dans l'un des quatre blocs d'articulation supérieurs (86), et en fonction de la position du centre de gravité par rapport à une enveloppe de stabilité dans un plan horizontal (P4) défini par le châssis (4), autoriser ou bloquer des mouvements de la nacelle (2).

## Patentansprüche

1. Scherenarbeitsbühne (2), umfassend:
- ein Fahrgestell (4), das geeignet ist, um durch Verbindungselemente (40) auf dem Boden zu stehen,
- eine Plattform (6),
- eine Hebevorrichtung (8) für die Plattform (6), umfassend einen Satz gelenkiger Stangen (80), die die Plattform (6) tragen, sodass das Anheben der Plattform (6) in Bezug auf das Fahrgestell (4) variabel ist und durch den Satz von Stangen (80) gesteuert wird, der Satz von Stangen (80) umfassend vier untere paarweise parallele Stangen (80A), die an vier unteren Gelenkblöcken (84) angelenkt sind, die mit dem Fahrgestell (4) verbunden sind, der Satz von Stangen (80) auch umfassend vier obere paarweise parallele Stangen (80B), die an vier oberen Gelenkblöcken (86) angelenkt sind, die mit der Plattform (6) verbunden sind,
- mindestens vier Sensoren (10), die jeweils konfiguriert sind, um eine Reaktionskraft (R1-R4, R5-R8) zu messen, die von der Plattform (6) in einem der vier unteren Gelenkblöcke (84) und/oder in einem der vier oberen Gelenkblöcke (86) entlang einer vertikalen Achse (Z8) der Arbeitsbühne (2) induziert wird, wobei diese Sensoren jeweils einen unteren (84) oder einen oberen (86) Gelenkblock ausrüsten,
wobei die Arbeitsbühne **dadurch gekennzeichnet ist, dass** jeder mit einem Sensor (10) ausgestattete Gelenkblock einen ersten Teil (84A, 86A) verbunden fest mit einer Schwenkachse (844, 864), die jeweils an einer der unteren (80A) oder oberen (80B) Stangen angelenkt ist, und einen zweiten Teil (84B, 86B, 86C), der in Bezug auf den ersten Teil (84A, 86A) beweglich und jeweils mit einer Fläche (422, 620) des Fahrgestells (4) oder der Plattform (6) in Kontakt ist, und dass jeder Sensor (10) zwischen den ersten Teil (84A, 86A) des Gelenkblocks (84, 86), in dem er montiert ist, und den zweiten Teil (84B, 86B, 86C) dieses Gelenkblocks (84, 86) eingefügt ist, um die Kraft zu messen, die von dem zweiten Teil (84B, 86B, 86C) auf den ersten Teil (84A, 86A) ausgeübt wird, die der Reaktionskraft (R1-R4, R5- R8) entspricht.

2. Scherenarbeitsbühne nach Anspruch 1, **dadurch gekennzeichnet, dass** in jedem Gelenkblock (84, 86), der mit einem Sensor (10) ausgestattet ist, der erste Teil (84A, 86A) dieses Gelenkblocks eine Fläche (848, 868) senkrecht zu der vertikalen Achse (Z8) der Arbeitsbühne umfasst, der zweite Teil (84B, 86B, 86C) dieses Gelenkblocks eine Oberfläche (850, 870) senkrecht zu der vertikalen Achse der Arbeitsbühne und gegenüber der Oberfläche des ersten Teils (84A, 86A) umfasst, wobei der erste Teil (84A, 86A) und der zweite Teil (84B, 86B, 86C) in Bezug aufeinander in Translation entlang der vertikalen Achse der Arbeitsbühne beweglich sind, und dass der Sensor (10) ein Kompressionssensor ist und zwischen die Oberfläche (848, 868) des ersten Teils (84A, 86A) und die Oberfläche (850, 870) des zweiten Teils (84B, 86B, 86C) eingefügt ist.

3. Scherenarbeitsbühne nach Anspruch 2, **dadurch gekennzeichnet, dass** der zweite Teil (84B, 86B, 86C) von jedem Gelenkblock (84, 86), der mit einem Sensor (10) ausgestattet ist, jeweils einen oberen Bereich oder unteren Bereich dieses Gelenkblocks (84, 86) bildet, und in eine obere (866) oder untere (846) Aufnahme eingesetzt ist, die an dem ersten Abschnitt (84A, 86A) dieses Gelenkblocks (84, 86) gebildet ist.

4. Scherenarbeitsbühne nach Anspruch 2, **dadurch gekennzeichnet, dass** der zweite Teil (86B) eine Aussparung (872) aufweist, in die der erste Teil (86A) eingesetzt ist.

5. Scherenarbeitsbühne nach Anspruch 2, **dadurch gekennzeichnet, dass** der erste Teil einen vertikalen Stab (874) umfasst, der fest mit der Schwenkachse (864) verbunden und senkrecht zu dieser Achse ist, dass der vertikale Stab (874) einen Ring (876) aufweist, der die Oberfläche (868) des ersten Teils (86A) bildet, dass der vertikale Stab (874) den zweiten Teil (86B) um die Oberfläche (870) des zweiten Teils (86B) durchquert, und dass der Drucksensor (10) ringförmig ist und zwischen dem Ring (876) des vertikalen Stabs (874) und der Oberfläche (870) des zweiten Teils (86B) ruht.

6. Scherenarbeitsbühne nach einem der vorherigen Ansprüche, **dadurch gekennzeichnet, dass** mindestens zwei der unteren Gelenkblöcke (84), die an zwei parallelen unteren Stangen (80A) angelenkt sind, gleitend mit dem Fahrgestell (4) verbunden sind, indem ein Gleitschuh (840), der an dem zweiten Teil (84B) dieser unteren Gelenkblöcke (84) bereitgestellt ist, gegen eine Oberfläche (422) einer an dem Fahrgestell (4) befestigten Schiene (42) drückt, und mindestens zwei der oberen Gelenkblöcke (86), die an zwei parallelen oberen Stangen (80B) angelenkt sind, mit der Plattform (6) gleitend durch eine Kufe (860) verbunden sind, die an dem zweiten Teil (86B) dieser oberen Gelenkblöcke (86) bereitgestellt ist und an einer Oberfläche (620) einer an der Plattform (6) befestigten Schiene (62) anliegt.

7. Scherenarbeitsbühne nach einem der vorherigen Ansprüche, **dadurch gekennzeichnet, dass** die mindestens vier Sensoren (10) in den unteren Gelenkblöcken (84) bereitgestellt sind.

8. Scherenarbeitsbühne nach einem der Ansprüche 1 bis 6, **dadurch gekennzeichnet, dass** die mindestens vier Sensoren (10) in den oberen Gelenkblöcken (86) bereitgestellt sind.

9. Scherenarbeitsbühne nach Anspruch 8, **dadurch gekennzeichnet, dass** die Plattform (6) eine einziehbare Verlängerung (64) aufweist, die konfiguriert ist, um auf einer Seite der Plattform (6) ausgefahren zu werden, um die Fläche der Plattform (6) zu vergrößern, und dass der Sensor (10), mit dem jeder der vier oberen Gelenkblöcke (86) ausgestattet ist, schwimmend in einer Aufnahme (876) des ersten Teils (86A) montiert ist, dass jeder obere Gelenkblock (86) zwei bewegliche Teile (86B, 86C) in Bezug auf den ersten Teil (86A) umfasst, wobei jeder dieser zwei beweglichen Teile (86B, 86C) jeweils mit einer oberen (620) und einer unteren (622) Oberfläche einer Schiene (62) in Kontakt ist, die an der Plattform (6) befestigt ist und in der der Gelenkblock (86) montiert ist, und dass jeder der zwei beweglichen Teile (86B, 86C) mit dem Sensor (10) in Kontakt ist.

10. Scherenarbeitsbühne nach Anspruch 8, **dadurch gekennzeichnet, dass** die Plattform (6) eine einziehbare Verlängerung (64) aufweist, die konfiguriert ist, um auf einer Seite der Plattform (6) ausgefahren zu werden, um die Fläche der Plattform (6) zu vergrößern, dass jeder obere Gelenkblock (86) zwei bewegliche Teile (86B, 86C) in Bezug auf den ersten Teil (86A) umfasst, wobei jeder dieser zwei beweglichen Teile (86B, 86C) jeweils mit einer oberen (620) und einer unteren (622) Oberfläche einer Schiene (62) in Kontakt ist, die an der Plattform (6) befestigt ist und in der der Gelenkblock (86) montiert ist, und dass der Gelenkblock (86) mit zwei Sensoren (12, 13) ausgestattet ist, wobei der eine (12) konfiguriert ist, um die Kraft zu messen, die durch den beweglichen Teil (86B) in Kontakt mit der oberen Oberfläche (620) der Schiene (62) auf den ersten Teil (86A) ausgeübt wird, und der andere (13) konfiguriert ist, um die Kraft zu messen, die durch den beweglichen Teil (86C) in Kontakt mit der unteren Oberfläche (622) der Schiene (62) auf den ersten Teil (86A) ausgeübt wird.

11. Verfahren zum Bestimmung der Stabilität einer Scherenarbeitsbühne (2) nach einem der vorherigen Ansprüche, **dadurch gekennzeichnet, dass** es einen Schritt umfasst, bei dem in einer elektronischen Einheit (15) der Arbeitsbühne (2), die Summe von zwei der Reaktionskräfte (R1-R4), die von der Plattform (6) in einem der vier unteren Gelenkblöcke (84) induziert werden, oder von zwei der Reaktionskräfte (R5-R8), die von der Plattform (6) in einem der vier oberen Gelenkblöcke (86) induziert werden, zu berechnen, die Summe mit einem Schwellenwert zu vergleichen und, wenn die Summe kleiner ist als der Schwellenwert, Aktionen zum Begrenzen des Umkipprisikos auszulösen.

12. Verfahren nach Anspruch 11, **dadurch gekennzeichnet, dass** die Maßnahmen zum Begrenzen des Umkipprisikos zumindest die Aktivierung eines Alarms oder die Blockierung von Bewegungen der Arbeitsbühne (2) in einer Richtung umfassen, die den Reaktionskräften entspricht, deren Summe unter dem Schwellenwert ist.

13. Verfahren nach einem der Ansprüche 11 und 12, **dadurch gekennzeichnet, dass** es einen Schritt umfasst, bei dem in der elektronischen Einheit (15) die Lage eines Schwerpunkts der Arbeitsbühne (2) berechnet wird, indem die Werte der Reaktionskräfte (R1-R4), die von der Plattform (6) in einem der vier unteren Gelenkblöcke (84) induziert werden, oder der Reaktionskräfte (R5-R8), die von der Plattform (6) in einem der vier oberen Gelenkblöcke (86) induziert werden, verwendet werden, und abhängig von der Position des Schwerpunkts in Bezug auf eine Stabilitätshülle in einer horizontalen Ebene (P4), die durch das Fahrgestell (4) definiert ist, Bewegungen der Arbeitsbühne (2) zulassen oder blockieren.

## Claims

1. Scissor lift cradle (2) comprising:
- a frame (4) able to rest on the ground by connecting members (40),
- a platform (6),
- a device for lifting (8) the platform (6), comprising a set of jointed bars (80) supporting the platform (6), such that the elevation of the platform (6) relative to the frame (4) is variable and controlled by the set of jointed bars (80), the set of jointed bars (80) comprising four lower bars (80A) defining parallel pairs hinged to four lower articulation blocks (84) connected to the frame (4), the set of jointed bars (80) also comprising four upper bars (80B) defining parallel pairs hinged to four upper articulation blocks (86) connected to the platform (6),
- at least four sensors (10) each configured to measure a reaction force (R1-R4, R5-R8) induced by the platform (6) in one of the four lower articulation blocks (84) and/or in one of the four upper articulation blocks (86) along a vertical axis (Z8) of the scissor lift cradle (2), these sensors each equipping a lower (84) or upper (86) articulation block,
the cradle being **characterized in that** each articulation block provided with a sensor (10) comprises a first portion (84A, 86A) secured to a pivot axis (844, 864) hinged to one of the lower (80A) or upper (80B) bars, respectively, and a second portion (84B, 86B, 86C) which is movable relative to the first portion (84A, 86A) and in contact with a surface (422, 620) of the frame (4) or the platform (6), respectively, and **in that** each sensor (10) is inserted between the first portion (84A, 86A) and the second portion (84B, 86B, 86C) of the articulation block (84, 86) in which the sensor is mounted so as to measure a force exerted by the second portion (84B, 86B, 86C) on the first portion (84A, 86A) corresponding to the reaction force (R1-R4, R5-R8).

2. The scissor lift cradle according to claim 1, **characterized in that** in each articulation block (84, 86) equipped with a sensor (10), the first portion (84A, 86A) of the articulation block comprises a surface (848, 868) perpendicular to the vertical axis (Z8), and the second portion (84B, 86B, 86C) of the articulation block comprises a surface (850, 870) perpendicular to the vertical axis and opposite the surface of the first portion (84A, 86A), the first portion (84A, 86A) and the second portion (84B, 86B, 86C) being translatable relative to one another along the vertical axis, and **in that** the sensor (10) is a compression sensor and is inserted between the surface (848, 868) of the first portion (84A, 86A) and the surface (850, 870) of the second portion (84B, 86B, 86C).

3. The scissor lift cradle according to claim 2, **characterized in that** the second portion (84B, 86B, 86C) of each articulation block (84, 86) equipped with a sensor (10) respectively forms an upper or lower zone of the articulation block (84, 86), and is inserted into an upper (866) or lower (846) housing formed on the first portion (84A, 86A) of the articulation block (84, 86).

4. The scissor lift cradle according to claim 2, **characterized in that** the second portion (86B) has a recess (872) in which the first portion (86A) is inserted.

5. The scissor lift cradle according to claim 2, **characterized in that** the first portion includes a vertical rod (874) secured to the pivot axis (864) and perpendicular to this axis, **in that** the vertical rod (874) has a ring (876) forming the surface (868) of the first portion (86A), **in that** the vertical rod (874) passes through the second portion (86B) around the surface (870) of the second portion (86B), and **in that** the compression sensor (10) has an annular shape and rests between the ring (876) of the vertical rod (874) and the surface (870) of the second portion (86B).

6. The scissor lift cradle according to one of the preceding claims, **characterized in that** at least two of the lower articulation blocks (84), hinged on two parallel lower bars (80A), are slidingly connected to the frame (4) by a pad (840) which is provided on the second portion (84B) of the at least two of the lower articulation blocks (84) and which is bearing against a surface (422) of a rail (42) attached to the frame (4), and at least two of the upper articulation blocks (86), hinged on two parallel upper bars (80B), are slidingly connected to the platform (6) by a pad (860) which is provided on the second portion (86B) of the at least two of the upper articulation blocks (86) and which is bearing against a surface (620) of a rail (62) attached to the platform (6).

7. The scissor lift platform according to one of the preceding claims, **characterized in that** the at least four sensors (10) are provided in the lower articulation blocks (84).

8. The scissor lift platform according to one of claims 1 to 6, **characterized in that** the at least four sensors (10) are provided in the upper articulation blocks (86).

9. The scissor lift platform according to claim 8, **characterized in that** the platform (6) includes a retractable extension (64), which is configured to be deployed on one side of the platform (6) so as to increase the surface of the platform (6), and **in that** the sensor (10) equipping each of the four upper articulation blocks (86) is mounted floating in a housing (876) of the first portion (86A), **in that** each upper articulation block (86) comprises two movable portions (86B, 86C) relative to the first portion (86A), each of these two movable portions (86B, 86C) respectively being in contact with an upper (620) and lower (622) surface of a rail (62) attached to the platform (6) and in which the upper articulation block (86) is mounted, and **in that** each of the two movable portions (86B, 86C) is in contact with the sensor (10).

10. The scissor lift platform according to claim 8, **characterized in that** the platform (6) includes a retractable extension (64), which is configured to be deployed on one side of the platform (6) so as to increase the surface of the platform (6), **in that** each upper articulation block (86) comprises two movable portions (86B, 86C) relative to the first portion (86A), each of these two movable portions (86B, 86C) respectively being in contact with an upper (620) and lower (622) surface of a rail (62) attached to the platform (6) and in which the upper articulation block (86) is mounted, and **in that** the upper articulation block (86) is equipped with two sensors (12, 13), one (12) being configured to measure the force exerted on the first portion (86A) by the movable portion (86B) in contact with the upper surface (620) of the rail (62), the other (13) being configured to measure the force exerted on the first portion (86A) by the movable portion (86C) in contact with the lower surface (622) of the rail (62).

11. A method for determining the stability of the scissor lift cradle (2) according to one of the preceding claims, **characterized in that** the method comprises a step consisting, in an electronic unit (15) of the cradle (2), in calculating the sum of two of the reaction forces (R1-R4) induced by the platform (6) in one of the four lower articulation blocks (84) or of two of the reaction forces (R5-R8) induced by the platform (6) in one of the four upper articulation blocks (86), and comparing said sum to a threshold value, and if said sum is below the threshold value, in triggering actions limiting tipping risk.

12. The method according to claim 11, **characterized in that** the actions limiting tipping risk comprise at least activating an alarm or blocking movements of the scissor lift cradle (2) in a direction corresponding to the reaction forces whose sum is lower than the threshold value.

13. The method according to one of claims 11 and 12, **characterized in that** the method comprises a step consisting in calculating, in the electronic unit (15), the location of a center of gravity of the scissor lift cradle (2) by using the values of the reaction forces (R1-R4) induced by the platform (6) in one of the four lower articulation blocks (84) or of the reaction forces (R5-R8) induced by the platform (6) in one of the four upper articulation blocks (86), and as a function of the position of the center of gravity relative to a stability envelope in a horizontal plane (P4) defined by the frame (4), authorizing or blocking movements of the scissor lift cradle (2).
